# EUROPEAN PATENT APPLICATION

(11) **EP 4 026 760 A1**
(43) Date of publication of application: **13.07.2022**
(21) Application number: 21150695.1
(22) Date of filing: 08.01.2021
(51) Int. Cl.: B62H 1/12

(54) **SAFETY WHEEL AND CONTROL SYSTEM THEREOF**

(71) Applicant: Akkök, Ahmet, 46050 Onikisubat Kahramanmaras (TR)
(72) Inventor: Akkök, Ahmet, 46050 Onikisubat Kahramanmaras (TR)
(74) Representative: Tasçi, Abdurrahman

(57) **Abstract**

This invention is about a safety wheel and control system that manipulates the tilt of two-wheeler vehicles such as bicycle and motorcycle and improves their safety with an additional wheel and control system and its' characteristic is; being consisted of the safety wheel (2) attached between the front and rear wheels of the vehicle (2), the first electric engine located inside the safety wheel (2) and the second electric engine (11) connected to the safety wheel (2) and determining its' direction, the right hydraulic piston (7) driven by the right directional motion of the safety wheel (2), the left hydraulic piston (8) driven by the left directional motion of the safety wheel (2), the first hydraulic connection (3) connecting the right hydraulic piston (7) to the bicycle chasis (1), the second hydraulic connection (4) connecting the left hydraulic piston (8) to the bicycle chassis (1), the electric-controlled right piston connected to the first hydraulic connection (3), the electric-controlled left piston connected to the second hydraulic connection (4), the tilt sensor located on the bicycle chassis (1), the suspension (6) vertically enabling a motion flexibility for the safety wheel (2), the rod (10) located between the suspension and the second electric engine (11).

## Description

### Technological Area:

This invention is about a safety wheel and control system that manipulates the tilt of two-wheeler vehicles such as bicycle and motorcycle and improves their safety with an additional wheel and control system.

### State of the Art:

When a bicycle or motorcycle is in motion the gyro effect of rotating wheels has a significant impact on vehicle balance. When wheels are not rotating bicycle or motorcycle can not stay in balance. The faster the wheels rotate the higher their balance stays stable the slower they rotate the lower it stays stable.

Two-wheelers can not stay in balance without a support when they're stationary. In the current situation of the technique methods to hold the two-wheeler in balance when it's stationary are given below.
- With a leg connected to vehicle used when stationary
- With the rider's help
- With a drive-force which monitors the tilt of the vehicle with sensors and drives the vehicle back to balance in the opposite direction of the tilt, this drive-force can be steering, wheel rotating and suspension lowering
- With the help of a gyro-balancer attached to the chasis

When the front wheel of a bicycle or a motorcycle is locked with a heavy braking it begins skidding and as a result of the slipping caused by this skid the motorcycle tilts towards left or right and falls down. In motorcycles equipped with ABS technology front wheel will not skid even if there's a heavy braking so it prevents tilting and falling down.

Motorcycles and bicycles enters turns by tilting towards the turn direction. This way they balance the centrifugal force in the opposite direction of the turn with the gravitational force in the tilt direction. The faster the vehicle enters the turn the more it requires tilting to balance itself. Centrifugal force imposes a force on the vehicle entering the turn in the opposite direction of the turn. The gravitational force to balance it tilting towards the turn direction is happening by means of the wheel holding on to the ground. The more the vehilce tilts the more the wheel requires to hold on to the ground. If the wheel does not adequately hold on to the ground the vehicle slips and falls down to the sidewise.

In conclusion there's a need for a low-cost new technology which can overcome the disadvantages mentioned above, hold the two-wheeler in balance when stationary without the need of a rider's help and can be produced and implemented easily.

### Invention Definition:

Problems the invention is intended to solve are listed below:
- For the vehicles which require a support to stay in balance when stationary, holding them in balance when stationary without the need of a rider's help,
- For the vehicles which require a support to stay in balance when stationary, supporting the riders to hold them in balance in slow speeds,
- For motorcycles or samelike vehicles which can tilt, preventing them to tilt and fall down in a brake caused by skidding and slipping even if they're not equipped with ABS technology,
- For motorcycles or samelike vehicles which can tilt, preventing them to slip and fall down to sidewise in turns caused by inadequate holding on to the ground.

All the advantages of the method subject to invention will be understood more clearly with the help of the scheme given below and the detailed description written by referring to this scheme, for this reason assessment should be made considering this scheme and the detailed description.

### Description of Figures:

The invention will be described by referring the figures enclosed, this way the characteristics of the invention will be understood and assessed more clearly, but this is not intended to limit the invention with this specific arrangements. Vice versa it's intended to cover all alternatives, changes and equivalents which can be involved under the area the invention is defined in by the claims enclosed. It must be understood that the shown details are given only for the description of the preferred arrangements of the current invention and presented to provide the most utilisable and clear definition of both the formation of the methods and the rules and conceptual characteristics of the invention. In these figures;

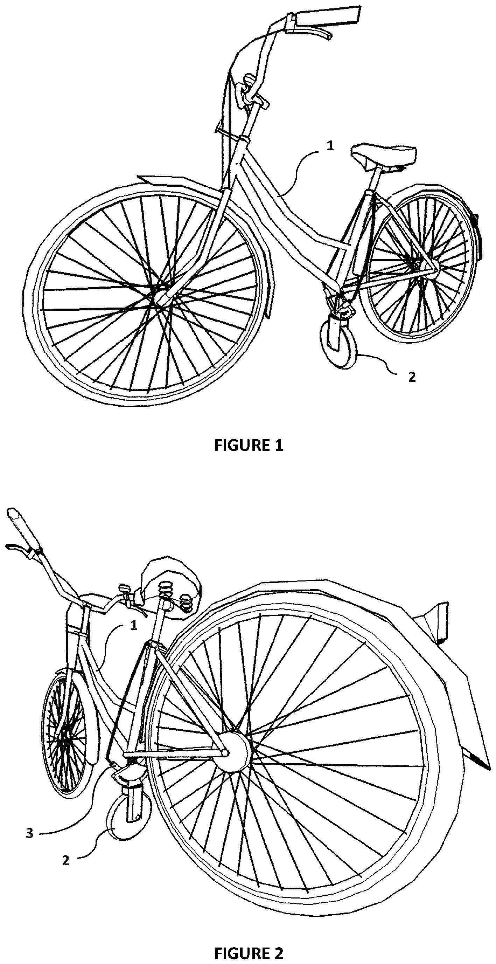

- Figure 1: Side view of the invention implemented on a bicycle when stationary (safety wheel perpendicular to the bicycle wheels).
- Figure 2: Perspective view of the invention implemented on a bicycle when stationary (safety wheel perpendicular to the bicycle wheels).
- Figure 3: Top view of the invention implemented on a bicycle when stationary (safety wheel perpendicular to the bicycle wheels)..

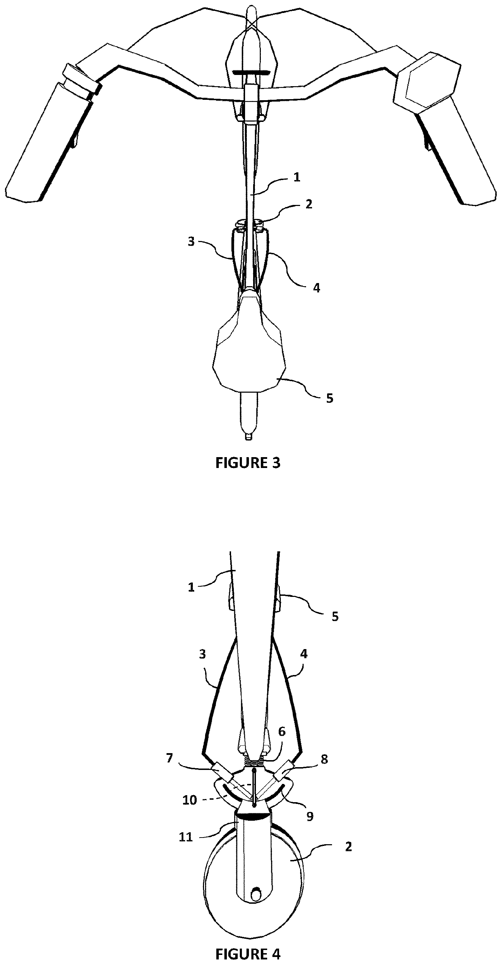

- Figure 4: Front view of the safety wheel of invention implemented on a bicycle when stationary.

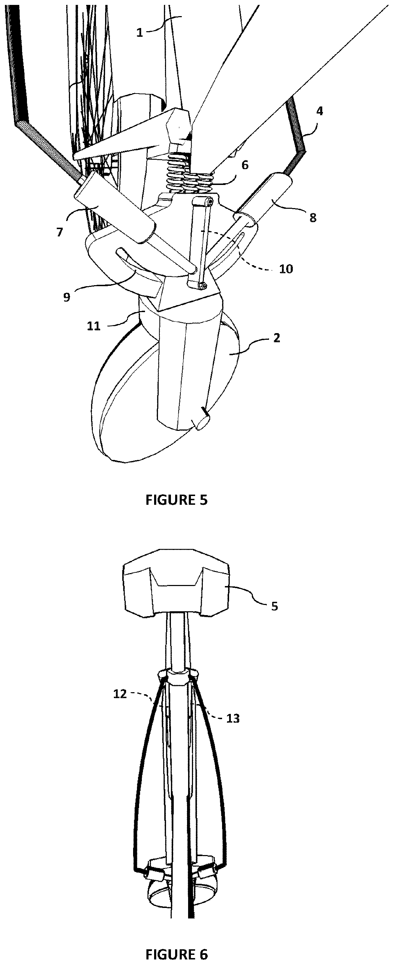

- Figure 5: Close perspective view of the safety wheel of invention implemented on a bicycle when stationary.
- Figure 6: Front view of the safety wheel and hydraulic system of invention implemented on a bicycle when stationary.

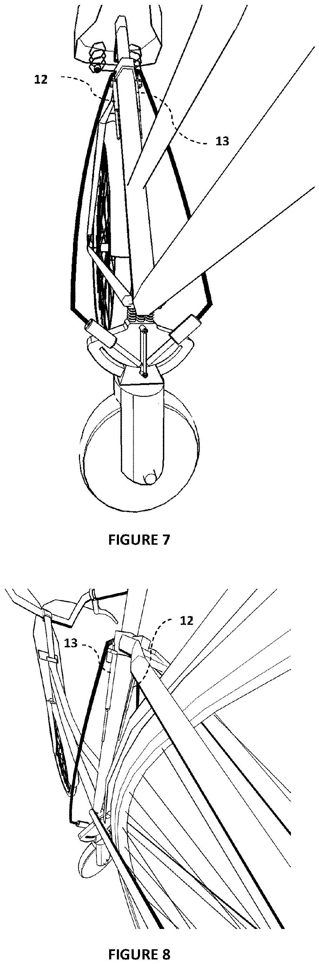

- Figure 7: Perspective view of the safety wheel and hydraulic system of invention implemented on a bicycle when stationary.
- Figure 8: Detail view of the electronic-controlled pistons, a part of the hydraulic system.

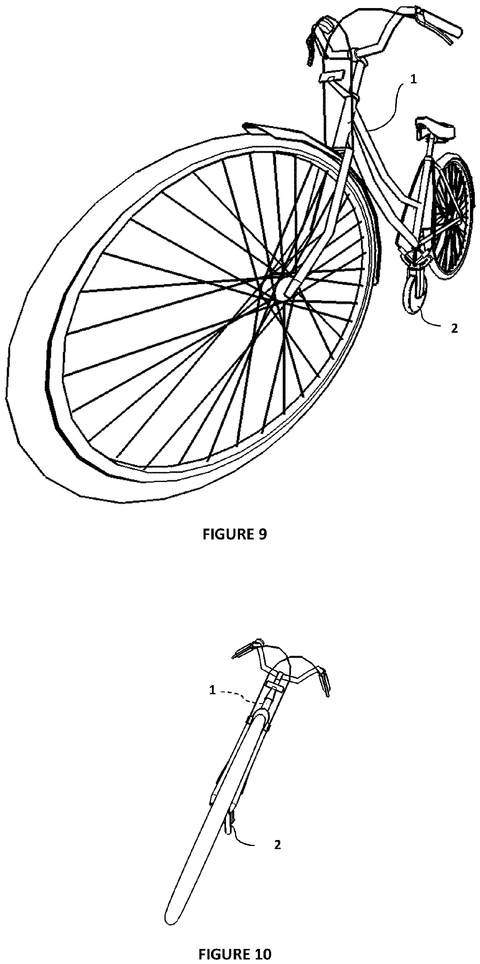

- Figure 9: Perspective view of the invention implemented on a bicycle when moving forwards (safety wheel parallel to the bicycle wheels).
- Figure 10: View of the safety wheel position stepping perpendicular on the ground when bicycle is in turn (bicycle wheel tilted to the ground).

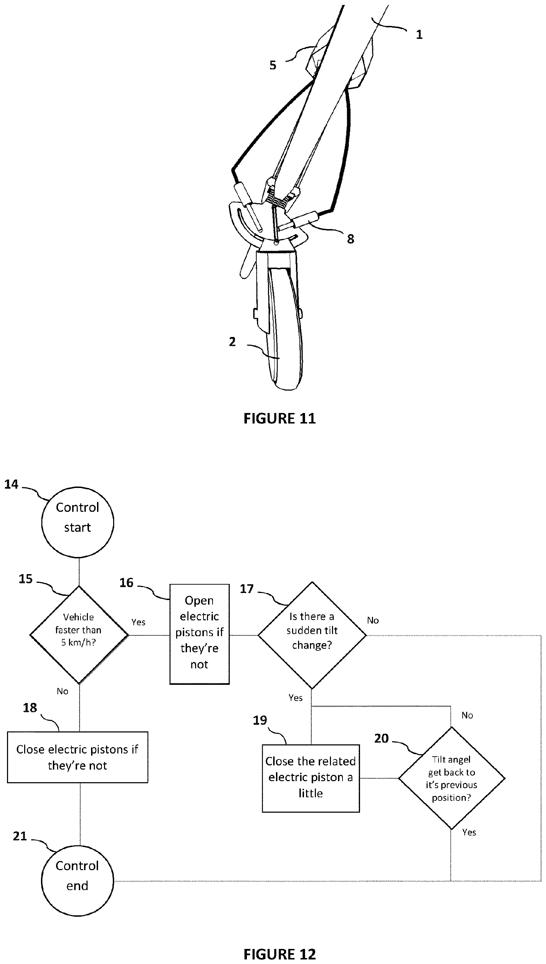

- Figure 11: Fron view of the safety wheel position stepping perpendicular onto the ground when bicycle is in turn (bicycle wheel tilted to the ground).
- Figure 12: Schematic view of the system flow of electric-controlled pistons.
- Figure 13: Schematic view of the system flow of the safety wheel steering control.
- Figure 14: Schematic view of the system flow of the safety wheel drive-control.

The figures that will help out to understand this invention are numbered as specified in the enclosed figure and they're given below by their names.

### Description of References:

- 1.: Bicycle Chasis
- 2.: Safety Wheel
- 3.: First Hydraulic Connection
- 4.: Second Hydraulic Connection
- 5.: Bicycle Saddle
- 6.: Suspension
- 7.: Right Hydraulic Piston
- 8.: Left Hydraulic Piston
- 9.: Motion Axis
- 10.: Rod
- 11.: Second Electric Engine
- 12.: Electric-Controlled Right Piston
- 13.: Electric-Controlled Left Piston
- 14.: First Control System Start
- 15.: Speed Control Module
- 16.: Piston Opening Module
- 17.: Tilt Change Module
- 18.: Piston Closing Module
- 19.: Partial Closing Module
- 20.: Tilt Matching Module
- 21.: Control System End
- 22.: Second Control System Start
- 23.: Motion Detection Module
- 24.: Tilt Detection Module
- 25.: Vertical Steering Module
- 26.: Parallel Steering Module
- 27.: Angle Adjustment Module
- 28.: Second Control System Module
- 29.: Third Control System Start
- 30.: Second Motion Detection Module
- 31.: Second Speed Control Module
- 32.: Speed Adjustment Module
- 33.: Second Tilt Detection Module
- 34.: Tilt Direction Module
- 35.: Safety Wheel Right Direction Module
- 36.: Safety Wheel Left Direction Module
- 37.: Third Control System Module

### Description of Invention:

The Invention consists of; the safety wheel (2) attached between the front and rear wheels of the vehicle (2), the first electric engine located inside the safety wheel (2) and the second electric engine (11) connected to the safety wheel (2) and determining its' direction, the right hydraulic piston (7) driven by the right directional motion of the safety wheel (2), the left hydraulic piston (8) dirven by the left directional motion of the safety wheel (2), the first hydraulic connection (3) connecting the right hydraulic piston (7) to the bicycle chasis (1), the second hydraulic connection (4) connecting the left hydraulic piston (8) to the bicycle chasis (1), the electric-controlled right piston (12) connected to the first hydraulic connection (3), the electric-controlled left piston (13) connected to the second hydraulic connection (4), the tilt sensor located on the bicycle chasis (1), the suspension (6) vertically enabling a motion flexibility for the safety wheel (2), the rod (10) located between the suspension and the second electric engine (11).

When vechile is not stationaery the second electric engine (11) of the invention; drives the safety wheel (2) along the motion axis (9) and determines its' direction.

The safety wheel (2) of the invention; moves along the motion axis (9) with the tilt of the vehicle in a way to manipulate the tilt of the bicycle chasis (1) and is being turned right and left with forward and backward motion by the first electric engine inside the safety wheel (2) then stresses the right hydraulic piston (7) and the left hydraulic piston (8) with the force gained by the safety wheel (2) with ground friction and transfers this force to the bicycle chasis (1).

The sensor of the invention; adjusts the rotating speed of the safety wheel (2), the force required for its' rotation and its' direction; by taking the information on vehicle speed, tilt and front wheel direction and safety wheel (2) direction, speed, its' direction according to the vehicle direction and whether it's rotating idle or not, as references.

The safety wheel (2) of the invention; is steered perpendicular to the vehicle direction by the second electric engine (11) when the vehicle stops.

The safety wheel (2) of the invention; is kept parallel to the front and rear wheels of the vehicle by the second electrical engine (11) when vehicle moves forward in a line perpendicular to the ground, in other words when there's no need for tilt manipulation.

The safety wheel (2) of the invention; is steered with an angle determined according to the bicycle tilt and speed when there's a need for tilt manipulation while the vehicle is moving forward.

The safety wheel (2) of the invention; is steered towards the direction the front wheel is steered in a way to support the steering of the front wheel.

The safety wheel (2) of the invention; transfers the force from the right hydraulic piston (7) and the left hydraulic piston (8) to the electric controlled right piston (12) and the electric controlled left piston (13) instead of the bicycle chasis (1) when there's no need for tilt manipulation when the vehicle is moving forward at adequate speeds.

The safety wheel (2) of the invention; adequately closes the electric controlled right piston (12) and the electric controlled left piston (13) and transfers the force from the right hydraulic piston (7) and the left hydraulic piston (8) to the bicycle chasis (1) in order to get the vehicle back to its' tilt position before the sudden tilt change for a safety measure when there's a sudden tilt change even if there's no tilt manipulation made.

The safety wheel (2) of the invention; is rotated by the first electric engine inside it to move the vehicle forward and get motion support to the moving vehicle when the safety wheel (2) is not manipulating the tilt.

The safety wheel (2) of the invention; activates the first electric engine inside it as a generator which drives the safety wheel (2) until the vehicle lowers its' speed to a certain point when braked and charges the battery located on the bicycle chasis (1).

The safety wheel (2) of the invention; changes in size and the first electric engine inside it and the second electric engine (11) which enables the steering change in force according to the weight of the vehicle they'll be used on.

The safety wheel (2) of the invention; is characterized by cancelling the tilt manipulation as a result of the electric controlled right piston (12) and the electric controlled left piston (13) opening.

The alternative arrangment for the right hydraulic piston (7), left hydraulic piston (8), the first hydraulic connection (3) and the second hydraulic connection (4) of the invention; is the safety wheel (2) being able to use also pneumatic pistons, riggid mechanical arms or towing ropes instead of the right hydraulic piston (7), left hydraulic piston (8), the first hydraulic connection (3) and the second hydraulic connection (4) to push the bicycle chasis (1).

The safety wheel (2) of the invention; is connected to the bicycle chasis (1) with the suspension (6) in order to maintain its' contact with the ground at various ground conditions.

The safety wheel (2) of the invention; can utilize only a rod (10) instead of a bearing to determine its' motion axis.

The control system of the electric controlled right piston (12) and the electric controlled left piston (13) of the invention; consists of the first control system start (14), the speed control module (15) which checks whether the vehicle exceeds a certain speed by the first control system start, the piston opening module (16) which opens the electric controlled right piston (12) and the electric controlled left piston (13), the tilt change module (17) which controls the sudden tilt changes, the piston closing module (18) which closes the electric controlled right piston (12) and the electric controlled left piston (13), the partial closing module (19) which adjusts the closing amount of the electric controlled right piston (12) or the electric controlled left piston (13) due to the regarding direction, the tilt matching module (20) which checks whether the vehicle gets back to the tilt position before the sudden tilt change and the control system end (21) where the systemn algorithm is finalized.

The steering control system of the safety wheel (2) of the invention; consists of the second control system start (22), motion detection module (23) which checks whether the vehicle stopped or not, the tilt detection module (24) which checks whether there's a tilt in the vehicle or not, the vertical steering module (25) which steers the safety wheel (2) perpendicular to the vehicle direction when there's a tilt detected, the parallel steering module (26) which steers the sfaety wheel (2) parallel to the vehicle direction when there's no tilt detected, the angle adjustment module (27) which adjusts the amgle of the safety wheel (2) according to the vehicle speed and tilt and the second control system end (28) where the system algorithm is finalized.

The drive control system of the safety wheel (2) of the invention; consists of the third control system start (29), the second motion detection module (30) which checks whether the vehicle stopped or not, the second speed control module (31) which checks whether the vehicle exceeds a certain speed, the speed adjustment module (32) which adjusts the safety wheel (2) speed according to the vehicle speed and tilt, the second tilt detection module (33) which checks whether there's a tilt in the vehicle or not, the tilt direction module (34) which checks the tilt direction of the vehicle, the right direction module (35) which drives the safety wheel (2) to go to the right side, the left direction module (36) which drives the safety wheel (2) to go to the left side and the third control system end (37).

The steering control system of the safety wheel (2) of the invention; proccesses the sensor data and determines the motion axis (9) in a way to increase the ground friction of the safety wheel (2) as the vehicle tilt increases.

### Detailed Description of the Invention:

The basic components consisting the invention are; the bicycle chasis (1), the safety wheel (2), the first hydraulic connection (3), the second hydraulic connection (4), the bicycle saddle (5) and the suspension (6), the right hydraulic piston (7), the left hydraulic piston (8), the rod (10), the first and the second electric engine (11), the electric controlled right piston (12) and the electric controlled left piston (13).

The invention has; the safety wheel (2) which's driven 90° toward right and left by the second electric engine (11) and turned forward and backward by the first electric engine (shown in figures inside the safety wheel (2)) and the control system which's utilized for the right hydraulic piston (7) and the left hydraulic piston (8) to be driven by the right hydraulic connection (3) and the left hydraulic connection (4) in a way to push the bicycle chasis (1) from right and left with the safety wheel (2) moving according to the vehicle tilt and which helps the vehicle to stand straight.

The control system and the safety wheel (2) of the invention manages the direction, speed and the drive force of the safety wheel (2) according to the parameters given below.

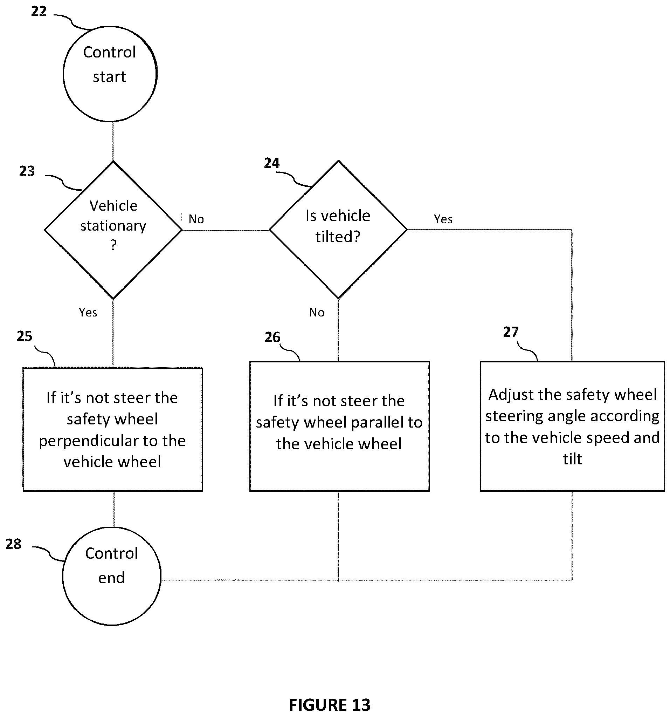

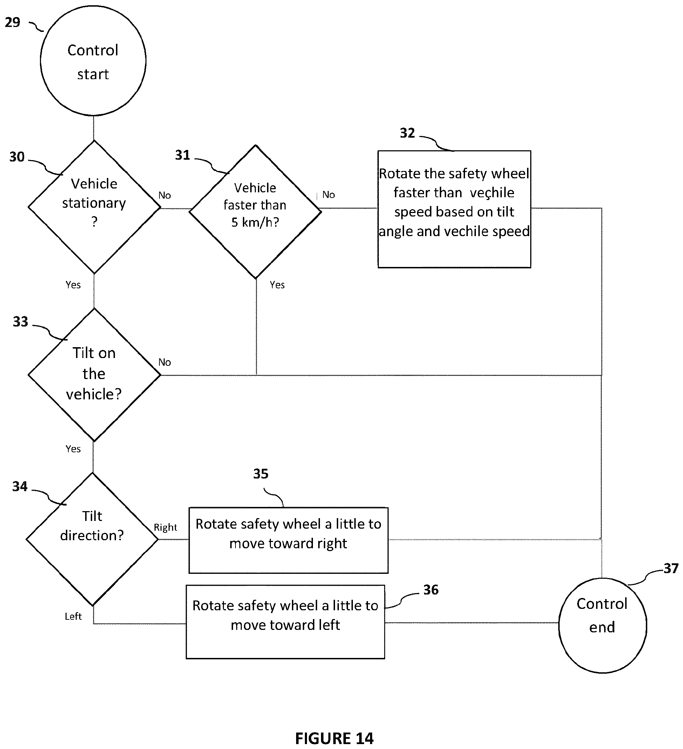

The direction control diagram of the control system and the safety wheel (2) is shown in Figure 13. The drive (steering) control diagram of the control system and the safety wheel (2) is shown in Figure 14.
- Vehicle speed
- Vehicle tilt
- Vehicle tilt change speed
- Angle of front wheel according to the vehicle
- Direction of the safety wheel (2)
- Speed of the safety wheel (2)
- Whether the safety wheel (2) skids or not
- Direction of the safety wheel (2) according to the vehicle

When the bicycle is stationary the safety wheel (2) is managed by the control system in a way to stay perpendicular to the vehicle direction. With the tilt information obtained from the tilt sensor located on the bicycle chasis (1), the safety wheel moves toward right as the bicycle tilts to the right and steered to the opposite direction toward the middle of the bicycle as the tilt decreases. This way the safety wheel (2) always maintains its' contact with the ground. The safety wheel (2) that moves right and left with the bicycle tilt, pushes the right hydraulic piston (7) and the left hydraulic piston (8) which are positioned at the right and left of the motion axis (9) with the force it obtains from ground friction during its' motion. The safety wheel (2) pushes the right hydraulic piston (7) when moving toward right and applies a force to the left on the bicycle chasis (1) from the most suitable top point of the bicycle chasis (1) with the help of the hydraulic system and this way prevents the bicycle from tilting and straighten it. Just like the same, in a bicycle that tilts to left the safety wheel (2) moves toward left, pushes the left hydraulic piston (8) and applies a force to the right on the bicycle chasis (1), prevents the bicycle from tilting and straighten it.

The force required to manipulate the vehicle tilt, will increase as the tilt increases becasue of the increasing gravity effect. For this reason the motion axis (9) of the safety wheel (2) is adjusted in a way to increase the ground friction of the safety wheel (2) as the vehicle tilt increases.

When the bicycle begins to move forward the safety wheel (2) is steered parallel to bicycle direction and this is done by the second electic engine (11). When the tilt changes after the bicycle begins moving, for instance a tilt to the right, the safety wheel (2) is steered toward right with and angle determined according to the bicycle tilt and speed and this way it pushes the right hydraulic piston (7) and the first hydraulic connection (3) puhes the bicycle chasis (1) to the right and prevents the bicycle to tilt and straightens it. As the bicycle tilt is changed the steering of the safety wheel (2) to the right ends.

When the bicycle is steered towards a direction with the front wheel the safety wheel (2) is steered towards the direction the front wheel is steered in a way to support the steering.

As the bicycle wheels will provide an adequate gyro effect to stay in balance while the bicycle is in motion with an adequate speed the safety wheel (2) is not needed to manipulate the bicycle tilt. When the safety wheel (2) is not desired to manipulate the bicycle tilt, the electric controlled right piston (12) and the electric controlled left piston (13) are opened and the safety wheel (2) transfers the force from the first hydraulic connection (3) and the second hydraulic connection (4) to the electric controlled right piston (12) and the electric controlled left piston (13) instead the bicycle chasis (1).

When the vehicle is at an adequate speed; when the electric controlled right piston (12) and the electric controlled left piston (13) are open in a sudden brake case which may cause the front wheel skid or in a turn at slippery ground which may cause the front wheel not adequately hold on to the ground, the control system detects the sudden change in tilt and in order to prevent the vehicle fall to the side the electric controlled right piston (12) and the electric controlled left piston (13) close to the point that to get the vehicle back to its' tilt position before slipping starts and provides a pushing force to the bicycle chasis (1) with the first hydraulic connection (3) or the second hydraulic connection (4) from one of regarding directions and prevents the vehicle tilted fall to the side.

When the battery charge on the vehicle is adequate the safety wheel (2) can be used to move the vehilce or to support the movement of the vehicle when it's not manipulating the tilt. When the vehicle brakes, the first electric engine which drives the safety wheel (2) is activated as a generator and it generates electric power to be able to charge the battery.

The size of the safety wheel (2) and the power of the first electric engine which drives the safety wheel (2) varies according to the weight and size of the vehicle they're used on. To get more friction in heavy vehicles, a thicker and bigger wheel and a more powerful second electric engine (11) are required.

For reasons such as improper ground conditions, classical two-wheeler experience or user request, the safety wheel (2) and the control system can be deactivated.
The safety wheel (2) pushes the hydraulic piston using its' ground fricition.
To push the chasis, pneumatic pistons, rigid mechanical arms or towing ropes can also be used instead of the right hydraulic piston (7), the left hydraulic piston (8) and the first hydraulic connection (3), the second hydraulic connection (4).

In order to maintain the contact of the safety wheel (2) to the ground in cases such as holes and slope differences, the safety wheel (2) is connected to the vehicle chasis with the suspension (6). Suspension system (6) shown in figures is just an example. Different known suspension systems can also be used for this job.

Instead of the part shown in figures, only the rod (10) or different parts and mechanisms can also be used used for the motion axis (9) of the safety wheel (2).

## Claims

1. The invention is about the safety wheel system to be added to vehicles which can be tilted such as bicycle, motorcycle etc. **and its' characteristic is being consisted of;**
- the safety wheel attached between the front and rear wheels of the vehicle (2),
- the first electric engine located inside the safety wheel (2)
- the second electric engine (11) moving the safety wheel (2) along the motion axis (9) and determining its' direction,
- the right hydraulic piston (7) driven by the right directional motion of the safety wheel (2),
- the left hydraulic piston (8) dirven by the left directional motion of the safety wheel (2),
- the first hydraulic connection (3) connecting the right hydraulic piston (7) to the bicycle chasis (1),
- the second hydraulic connection (4) connecting the left hydraulic piston (8) to the bicycle chasis (1),
- the electric-controlled right piston (12) connected to the first hydraulic connection (3),
- the electric-controlled left piston (13) connected to the second hydraulic connection (4),
- the tilt sensor located on the bicycle chasis (1),
- the suspension (6) vertically enabling a motion flexibility for the safety wheel (2),
- the suspension (6) vertically enabling a motion flexibility for the safety wheel (2), the rod (10) located between the suspension and the second electirc engine (11).

2. What's mentioned in Claim 1 is the safety wheel (2) and its' charatceristic is; moving along the motion axis (9) with the tilt of the vehicle in a way to manipulate the tilt of the bicycle chasis (1) and being turned right and left with forward and backward motion by the first electric engine inside the safety wheel (2) then stressing the right hydraulic piston (7) and the left hydraulic piston (8) with the force gained by the safety wheel (2) with ground friction and transferring this force to the bicycle chasis (1).

3. What's mentioned in Claim 1 is the safety wheel (2) and its' charatceristic is; when the bicycle is steered toward a direction with the front wheel the safety wheel (2) being steered toward the direction the front wheel is steered in a way to support the steering.

4. What's mentioned in Claim 1 is the safety wheel (2) and its' charatceristic is; transferring the force from the right hydraulic piston (7) and the left hydraulic piston (8) to the electric controlled right piston (12) and the electric controlled left piston (13) instead of the bicycle chasis (1) when there's no need for tilt manipulation when the vehicle is moving forward at adequate speeds.

5. What's mentioned in Claim 1 is the safety wheel (2) and its' charatceristic is; adequately closing the electric controlled right piston (12) and the electric controlled left piston (13) and transferring the force from the right hydraulic piston (7) and the left hydraulic piston (8) to the bicycle chasis (1) in order to get the vehicle back to its' tilt position before the sudden tilt change for a safety measure when there's a sudden tilt change even if there's no tilt manipulation made.

6. What's mentioned in Claim 1 is the safety wheel (2) and its' charatceristic is; being rotated by the first electric engine inside it to move the vehicle forward and get motion support to the moving vehicle when the safety wheel (2) is not manipulating the tilt.

7. What's mentioned in Claim 1 is the safety wheel (2) and its' charatceristic is; activating the first electric engine inside it as a generator which drives the safety wheel (2) until the vehicle lowers its' speed to a certain point when braked and charging the battery located on the bicycle chasis (1).

8. What's mentioned in Claim 1 is the safety wheel (2), the first electric engine and the second electric engine (11) inside it and their charatceristic is; the safety wheel (2) changing in thicknes and size and the first electric engine inside it and the second electric engine (11) which enables the steering changing in power according to the weight of the vehicle they'll be used on.

9. What's mentioned in Claim 1 is the safety wheel (2) and its' charatceristic is; cancelling the tilt manipulation as a result of the electric controlled right piston (12) and the electric controlled left piston (13) opening.

10. What's mentioned in Claim 1 is the alternative arrangment for the right hydraulic piston (7), left hydraulic piston (8), the first hydraulic connection (3) and the second hydraulic connection (4) and its' characteristic is; the safety wheel (2) being able to use also pneumatic pistons, riggid mechanical arms or towing ropes instead of the right hydraulic piston (7), left hydraulic piston (8), the first hydraulic connection (3) and the second hydraulic connection (4) to push the bicycle chasis (1).

11. What's mentioned in Claim 1 is the safety wheel (2) and its' charatceristic is; being connected to the bicycle chasis (1) with the suspension (6) in order to maintain its' contact with the ground at various ground conditions.

12. The invention is about the safety wheel control system and its' caharacteristics are being the control system of the electric controlled right piston (12) and the electric controlled left piston (13) and being consisted of;
- the first control system start (14),,
- the speed control module (15) which checks whether the vehicle exceeds a certain speed by the first control system start,
- the piston opening module (16) which opens the electric controlled right piston (12) and the electric controlled left piston (13),
- the tilt change module (17) which controls the sudden tilt changes,
- the piston closing module (18) which closes the electric controlled right piston (12) and the electric controlled left piston (13),
- the partial closing module (19) which adjusts the closing amount of the electric controlled right piston (12) or the electric controlled left piston (13) due to the regarding direction,
- the tilt matching module (20) which checks whether the vehicle gets back to the tilt position before the sudden tilt change,
- the control system end (21) where the systemn algorithm is finalized.

13. What's mentioned in Claim 12 is the safety wheel control system and its' characteristics are being the steering control system of the safety wheel (2) and being consisted of;
- the second control system start (22),
- motion detection module (23) which checks whether the vehicle stopped or not,
- the tilt detection module (24) which checks whether there's a tilt in the vehicle or not,
- the vertical steering module (25) which steers the safety wheel (2) perpendicular to the vehicle direction when there's a tilt detected,
- the parallel steering module (26) which steers the sfaety wheel (2) parallel to the vehicle direction when there's no tilt detected,
- the angle adjustment module (27) which adjusts the amgle of the safety wheel (2) according to the vehicle speed and tilt,
- the second control system end (28) where the system algorithm is finalized.

14. What's mentioned in Claim 12 is the safety wheel control system and its' characteristics are being drive control system of the safety wheel (2) and beign consisted of;
- the third control system start (29),
- the second motion detection module (30) which checks whether the vehicle stopped or not,
- the second speed control module (31) which checks whether the vehicle exceeds a certain speed,
- the speed adjustment module (32) which adjusts the safety wheel (2) speed according to the vehicle speed and tilt,
- the second tilt detection module (33) which checks whether there's a tilt in the vehicle or not,
- the tilt direction module (34) which checks the tilt direction of the vehicle,
- the right direction module (35) which drives the safety wheel (2) to go to the right side,
- the left direction module (36) which drives the safety wheel (2) to go to the left side,
- the third control system end (37).

15. What complies with the Claim 1 or Claim 13 is the steering control system of the safety wheel (2) and its' characteristic is; proccessing the sensor data and determining the motion axis (9) in a way to increase the ground friction of the safety wheel (2) as the vehicle tilt increases.
